# EUROPÄISCHE PATENTSCHRIFT

(11) **EP 2 463 525 B1**
(45) Veröffentlichungstag und Bekanntmachung des Hinweises auf die Patenterteilung: **03.07.2013**
(21) Anmeldenummer: 10194703.4
(22) Anmeldetag: 13.12.2010
(51) Int. Cl.: F04B 37/20, F04F 1/06, B01D 53/04, B01D 53/047, B01D 53/14, B01D 53/74, B01D 53/75, C07B 63/00, F17C 5/00, F17C 5/02, C07C 381/12

(54) **Verdichter und Verfahren zum Verdichten technischer Gase**
Compressor and method for compressing technical gases
Compresseur et procédé de compression de gaz techniques

(43) Veröffentlichungstag der Anmeldung: 13.06.2012
(73) Patentinhaber: LANXESS Deutschland GmbH, 51369 Leverkusen (DE)
(72) Erfinder: Heuer, Lutz, Dr., 41542 Dormagen (DE)
(74) Vertreter: Deblon, Jörg-Stephan

(56) Entgegenhaltungen:
- EP-A1- 1 679 307
- EP-A2- 0 744 206
- WO-A1-96/04978
- DE-A1- 4 327 524
- US-A- 6 156 100
- Gerhard, Dirk: "Zur Auswahl und Entwicklung ionischer Flüssigkeiten für spezielle Anwendungen der Energieerzeugung, Energiespeicherung und zur Nutzung in energieeffizienten Trenn- und Kompressionsverfahren" In: 21. Dezember 2007 (2007-12-21), Dissertation an der Technischen Fakultät der Friedrich-Alexander-Universität Erlangen-Nürnberg, Erlangen, XP002662054, * Seite 1 - Seite 135 * * Stofftrennungs- und Kompressionseigenschaften. Seiten 66-92 *

## Beschreibung

Die vorliegende Erfindung betrifft einen Verdichter und ein Verfahren, mit deren Hilfe ein insbesondere im Wesentlichen isothermes Verdichten technischer Gase erfolgen kann.

Um Gase im Wesentlichen isotherm zu verdichten, ist es bekannt bei einem Verdichter das in einen Verdichtungszylinder eingeleitete Gas nicht mit einem Kolben sondern mit einer Verdrängerflüssigkeit zu komprimieren, so dass die bei Komprimierung des Gases entstehende Wärme von der Verdrängerflüssigkeit aufgenommen und innerhalb der Verdrängerflüssigkeit vom Gas weggeleitet werden kann. Die im industriellen Maßstab verwendeten technischen Gase sind jedoch häufig Gase, die in Kreislaufströmen chemischer Prozesse rückgewonnen wurden und aufgrund von sich einstellenden chemischen Gleichgewichten mit insbesondere gasförmigen Verunreinigungen beladen sind. Ein typisches technisches Gas weist deswegen neben einer gewünschten Hauptkomponente eine oder mehrere insbesondere gasförmige Verunreinigungen auf. Diese Verunreinigungen können von der Verdrängerflüssigkeit absorbiert werden, so dass die Verdrängerflüssigkeit aufgrund dieser Kontamination seine chemischen und physikalischen Eigenschaften verändern kann und nach einer bestimmten Alterung ausgetauscht werden muss. Um den Austausch der Verdrängerflüssigkeit zu vermeiden oder zumindest zu verzögern, ist es erforderlich das technische Gas vor dem Verdichten einer Gaswäsche zu unterziehen, die jedoch kostenintensiv und nur unzureichend effektiv ist.

Das US Patent 6,156,100 beschreibt einen Konzentrator, bei dem ein Gas unter Druck in einen Absorber eingeleitet wird, in dem in der Art einer Gaswäsche in einer flüssigen Absorptionsflüssigkeit eine Komponente des eingeleiteten Gases absorbiert wird. Nach der Absorption wird das gereinigte Gas in einem Entspannungsbehälter gespeichert.

Es ist die Aufgabe der Erfindung einen Verdichter und ein Verfahren zum insbesondere isothermen Verdichten technischer Gase zu schaffen, die unempfindlicher gegen Verunreinigungen der zu verdichtenden technischen Gase sind.

Die Lösung der Aufgabe erfolgt erfindungsgemäß durch einen Verdichter zum insbesondere isothermen Verdichten technischer Gase, mit einem Verdichtungszylinder, in den ein Verunreinigungen aufweisendes technisches Gas einleitbar ist, und einem mit einer Kompressorpumpe in den Verdichtungszylinder einleitbaren Verdrängerflüssigkeit, wobei die Verdrängerflüssigkeit für mindestens eine Verunreinigung des technischen Gases ein höhere Löslichkeit als für eine Hauptkomponente des technischen Gases aufweist, wobei ein Entspannungsraum zur Desorption der Verunreinigung aus zumindest einen Teil der Verdrängerflüssigkeit vorgesehen ist, wobei eine Purge-Pumpe zur Abfuhr von in die Gasphase übergegangener Verunreinigungen mit dem Entspannungsraum verbunden ist.

Weiterer Gegenstand der Erfindung ist ein Verfahren zum insbesondere isothermen Verdichten technischer Gase, bei dem ein technisches Gas, das eine Hauptkomponente und mindestens eine Verunreinigung aufweist, einem erfindungsgemäßen Verdichter zugeführt wird, das technische Gas von der Verdrängerflüssigkeit komprimiert wird, wobei gleichzeitig zumindest ein Teil der Verunreinigung von der Verdrängerflüssigkeit absorbiert wird und nachfolgend aus zumindest einem Teil der Verdrängerflüssigkeit die absorbierte Verunreinigung in die Gasphase zumindest teilweise desorbiert und abgeführt wird.

Der erfindungsgemäße Verdichter zum insbesondere isothermen Verdichten technischer Gase weist einen Verdichtungszylinder, in den ein Verunreinigungen aufweisendes technisches Gas einleitbar ist, und eine mit einer Kompressorpumpe in den Verdichtungszylinder einleitbare Verdrängerflüssigkeit auf, wobei die Verdrängerflüssigkeit für mindestens eine Verunreinigung des technischen Gases ein höhere Löslichkeit als für eine Hauptkomponente des technischen Gases aufweist. Erfindungsgemäß ist ein Entspannungsraum zur Desorption der Verunreinigung aus zumindest einen Teil der Verdrängerflüssigkeit vorgesehen, wobei eine Purge-Pumpe zur Abfuhr von in die Gasphase übergegangener Verunreinigungen mit dem Entspannungsraum verbunden ist.

Durch den für den Verdichter zusätzlichen zu dem Verdichtungszylinder vorgesehenen und von dem Verdichtungszylinder getrennten Entspannungsraum können die von der Verdrängerflüssigkeit absorbierten Verunreinigungen in einer kontrollierten Atmosphäre wieder abgetrennt werden, so dass eine Alterung der Verdrängerflüssigkeit durch eine fortschreitende Kontamination mit absorbierten Verunreinigungen vermieden oder zumindest deutlich reduziert werden kann. Der Verdichter ist dadurch unempfindlicher gegen Verunreinigungen der zu verdichtenden technischen Gase, ohne dass eine zusätzlich vorgeschaltete Gaswäsche erforderlich ist. Gleichzeitig kann der Verdichter zusätzlich zu der Funktion des Verdichtens auch die Funktion eines Abtrennen von Verunreinigungen aus dem technischen Gas wahrnehmen, so dass vorzugsweise die chemischen und physikalischen Eigenschaften der Verdrängerflüssigkeit sogar zum Zwecke der Absorption von Verunreinigungen aus dem technischen Gas ausgewählt sein können. Eine Absorption von Verunreinigungen durch die Verdrängerflüssigkeit soll also nicht vermieden sondern sogar bewusst herbeigeführt werden. Die Desorption der von der Verdrängerflüssigkeit aufgenommenen Verunreinigungen kann hierbei in den Verdichter integriert werden, so dass beispielsweise der Entspannungsraum mit Hilfe der sowieso vorgesehenen Kompressorpumpe gefüllt und/oder geleert werden kann.

Die Kompressorpumpe kann die Verdrängerflüssigkeit beispielsweise aus einen Reservoir in den Verdichtungszylinder pumpen, um das vorher angesaugte und/oder eingepumte technische Gas zu komprimieren. Bei einem hinreichend hohen Füllstand der Verdrängerflüssigkeit in dem Verdichtungszylinder kann beispielsweise über ein Öffnen eines Auslassventils das komprimierte Gas auf dem höheren Druckniveau den Verdichtungszylinder verlassen. Hierbei ist es möglich den Verdichtungszylinder weiter mit der Verdrängerflüssigkeit zu befüllen, so dass die nachströmende Verdrängerflüssigkeit ein entsprechend großes Volumen des komprimierten Gases aus den Verdichtungszylinder drücken kann. Anschließend kann die Kompressorpumpe ihre Pumprichtung ändern und insbesondere nach einem Schließen des Auslassventils die Verdrängerflüssigkeit aus den Verdichtungszylinder herauspumpen. Während des Herauspumpens der Verdrängerflüssigkeit kann beispielsweise ein Einlassventil geöffnet werden, so dass mit Hilfe des durch das Herauspumpen der Verdrängerflüssigkeit entstehenden Unterdrucks ein zu komprimierendes technisches Gas in den Verdichtungszylinder angesaugt werden kann. Insbesondere kann zumindest ein Teil der herausgepumpten Verdrängerflüssigkeit vorzugsweise mit Hilfe der Kompressorpumpe in den Entspannungsraum gepumpt werden, um während der Komprimierung absorbierte Verunreinigung wieder desorbieren zu können. Die Purge-Pumpe kann die in dem Entspannungsraum vorliegende Gasphase mit den desorbierten Verunreinigungen abführen und ein möglichst niedriges Druckniveau innerhalb des Entspannungsraums einstellen. Es ist auch möglich die Verdrängerflüssigkeit mehrere Verdichtungszyklen in dem Entspannungsraum zu lassen, so dass je nach Pumpleistung der Purge-Pumpe ein besonders niedriges Druckniveau erreicht werden kann, das nur geringfügig über dem Dampfdruck der Verdrängerflüssigkeit oder sogar in der Nähe von Vakuum liegt. Für eine nachfolgende Komprimierung kann die Kompressorpumpe zumindest einen Teil der durch die Desorption gereinigten Verdrängerflüssigkeit in den Verdichtungszylinder pumpen. Durch die zumindest teilweise Reinigung der Verdrängerflüssigkeit ist das Absorptionsvermögen verbessert, so dass eine entsprechend größere Stoffmenge an Verunreinigungen in der Verdrängerflüssigkeit gelöst und über die Desorption abgetrennt werden kann.

Insbesondere ist der Entspannungsraum zur Desorption der Verunreinigungen nur teilweise von der Verdrängerflüssigkeit befüllbar. Dadurch verbleibt in dem Entspannungsraum eine Gasphase, in welche die in der Verdrängerflüssigkeit gelösten Verunreinigungen übertreten können. Gleichzeitig kann ein hohes Druckniveau vermieden werden und mit Hilfe der Purge-Pumpe ein möglichst niedriges Druckniveau innerhalb des Entspannungsraums aufrecht erhalten werden. Insbesondere kann vermieden werden, dass die Purge-Pumpe unbeabsichtigt Verdrängerflüssigkeit aus dem Entspannungsraum austrägt.

Vorzugsweise weist der Entspannungsraum bei eingeleiteter Verdrängerflüssigkeit einen Entspannungsdruck p_{E} und der Verdichterzylinder im im Wesentlichen entleerten Zustand einen Ansaugdruck p_{A} auf, wobei der Entspannungsdruck p_{E} geringer als der Ansaugdruck p_{A} ist, wobei insbesondere 0,000001 1≤ p_{E}/p_{A} ≤ 0,9, vorzugsweise 0,0005 ≤p_{E}/p_{A} ≤ 0,7, weiter bevorzugt 0,01 ≤ p_{E}/p_{A} ≤ 0,5 und besonders bevorzugt 0,2 ≤ p_{E}/p_{A} ≤ 0,4 gilt. Dadurch stellt sich im Entspannungsraum ein vergleichsweise geringer Druck ein, der eine Desorption der absorbierten Verunreinigungen fördert. Gleichzeitig kann im Verdichtungszylinder ein vergleichsweise hoher Druck vorherrschen, der eine Absorption begünstigt und eine Desorption noch im Verdichtungszylinder verhindert oder zumindest gering hält.

Besonders bevorzugt weist der Entspannungsraum bei eingeleiteter Verdrängerflüssigkeit einen Entspannungsdruck p_{E} auf, wobei für den Entspannungsdruck p_{E} 10 hPa ≤ p_{E} ≤ 1000 hPa, insbesondere 50 hPa ≤ p_{E} ≤ 800 hPa, vorzugsweise 100 hPa ≤ p_{E} ≤ 600 hPa und besonders bevorzugt 200 hPa ≤ p_{E} ≤ 400 hPa gilt. Derartige Drucke lassen sich von der Purge-Pumpe in dem Entspannungsraum vergleichsweise einfach erreichen, wobei sich bei diesen Drucken eine Desorption der Verunreinigungen in einem vergleichsweise großen Ausmaß erreichen lassen.

Insbesondere weist der Entspannungsraum eine Temperatur T_{E} und der Verdichtungszylinder eine Verdichtertemperatur T_{V} auf, wobei 1 K ≤ (T_{E} -T_{V}) 100 K, insbesondere 5 K ≤ (T_{E} - T_{V}) ≤ 50 K und vorzugsweise 10 K ≤ (T_{E} -T_{V}) ≤ 30 K gilt. Derartige Temperaturdifferenzen fördern die Absorption der Verunreinigungen innerhalb des Verdichtungszylinders und die Desorption der Verunreinigungen in dem Entspannungsraum. Gleichzeitig sind derartige Temperaturdifferenzen vergleichsweise gut handhabbar, um für die Verdrängerflüssigkeit eine definierte Temperatur einzustellen. Insbesondere wenn eine im Wesentlichen isotherme Verdichtung erreicht werden soll, kann mit Hilfe eines Wärmetauschers die durch die aufgenommene Verdichtungswärme erwärmte Verdrängerflüssigkeit gekühlt werden, wobei ein Teil dieser abgeführten Wärme beispielsweise dem Entspannungsraum zugeführt werden kann. Ferner kann die erwärmte Verdrängerflüssigkeit aus dem Entspannungsraum ebenfalls der kühlenden Seite des selben Wärmetauschers zugeführt werden.

Vorzugsweise ist die Purge-Pumpe als Vakuumpumpe ausgestaltet. Dies ermöglicht es ein besonders niedriges Druckniveau innerhalb des Entspannungsraums einzustellen. Ferner ist es möglich besonders viele Moleküle der desorbierten Verunreinigungen über die Purge-Pumpe auszutragen. Aufgrund der besonderen Bauart der Vakuumpumpe kann eine Rückströmung zurück in den Entspannungsraum vermieden werden, so dass eine unbeabsichtigte Druckerhöhung innerhalb des Entspannungsraums durch Leckageströmungen vermieden werden kann.

In einer bevorzugten Ausführungsform ist mindestens ein Zusatzzylinder zur stufenweisen Verdichtung des technischen Gases vorgesehen, wobei die Kompressorpumpe derart mit dem Verdichtungszylinder, dem Zusatzzylinder und dem Entspannungsraum verbunden ist, dass bei einem Entleeren des Verdichtungszylinder mit Hilfe der Kompressorpumpe sowohl der Zusatzzylinder als auch der Entspannungsraum befüllbar ist. Insbesondere sind mehrere Zusatzzylinder in Reihe geschaltet, um durch die stufenweise Verdichtung ein besonders hohes Druckniveau für das komprimierte Gas zu erreichen. Beispielsweise sind drei bis sieben in Reihe geschaltete Zusatzzylinder vorgesehen. Zur Erhöhung des Volumenstroms können pro Stufe auch mehrere Verdichtungszylinder beziehungsweise Zusatzzylinder parallel geschaltet sein. Insbesondere kann in dem Zusatzzylinder mit Hilfe der Verdrängerflüssigkeit nicht nur eine zusätzliche Verdichtung sondern auch eine zusätzlich Absorption von Verunreinigungen stattfinden. Vorzugsweise weist der Zusatzzylinder ein geringeres Volumen als der Verdichtungszylinder oder ein vorheriger Zusatzzylinder auf. Dadurch ist es möglich in dem Zusatzzylinder ein geringeres Restvolumen für das komprimierte Gas vorzusehen und/oder ein geringeres Volumen an Verdrängerflüssigkeit einzupumpen, so dass das Differenzvolumen der Verdrängerflüssigkeit in den Entspannungsraum geleitet werden kann. Hierzu ist es möglich mit der selben Kompressorpumpe sowohl den Zusatzzylinder als auch den Entspannungsraum zu befüllen, wobei diese Befüllung gleichzeitig zur Entleerung des Verdichtungszylinders erfolgen kann.

Insbesondere weist die Verdrängerflüssigkeit bei 23°C und 1000 hPa ein Dampfdruck pᵥ von pᵥ ≤ 1 hPa, insbesondere pᵥ ≤ 0,1 hPa, vorzugsweise pᵥ ≤ 0,01 hPa und besonders bevorzugt pᵥ ≤ 0,001 hPa aufweist. Insbesondere liegt der Dampfdruck unterhalb der Messgrenze laborüblicher Messgeräte. Da die Verdrängerflüssigkeit im Wesentlichen keinen Dampfdruck aufweist oder der Dampfdruck vernachlässigbar gering ist, kann ein Verdampfen der Verdrängerflüssigkeit in dem Entspannungsraum vermieden werden. Selbst bei besonders geringen Drucken innerhalb des Entspannungsraums kann ein Verdampfen der Verdrängerflüssigkeit weitgehend vermieden werden, so dass im Wesentlichen nur die absorbierten Verunreinigungen in die Gasphase übertreten.

Geeignete Verdrängerflüssigkeiten sind insbesondere ionische Flüssigkeiten. Unter ionischen Flüssigkeiten sind im Sinne der Erfindung Verbindungen zu verstehen, die mindestens ein Kation oder eine kationische Gruppe und mindestens ein Anion oder eine anionische Gruppe aufweisen, insgesamt jedoch ladungsneutral sind, und bei 23°C und 1000 hPa flüssig sind. Ein unbeabsichtigtes Verdampfen der Verdrängerflüssigkeit kann dadurch weitgehend vermieden werden.

Bevorzugte ionische Flüssigkeiten sind solche, die ein organisches Kation und ein organisches Anion aufweisen.

Eine geeignete als Betriebsflüssigkeit bezeichnete Verdrängerflüssigkeit ist beispielsweise in Anspruch 7 von DE 10 2006 014 335 A1 beschrieben. Vorzugsweise wird als Verdrängerflüssigkeit 1 -Butyl-2,3-dimethylimidazoliumbis(trifluoromethylsulfonyl) imid und/oder 1-Butyl-3-ethyl-2-dimethylimidazoliumbis(trifluoromethylsulfonyl)imid verwendet.

Die Verdrängerflüssigkeit weist vorzugsweise eine Viskosität kleiner 1200 mPas bei -10°C und größer 10 mPas bei +100°C auf. In einer bevorzugten Ausführungsform sind der Verdrängerflüssigkeit im Vergleich zur übrigen Verdrängerflüssigkeit leichter verdampfbare Zusatzmittel beispielsweise Wasser und/oder Methan zugemischt, so dass die Verdrängerflüssigkeit durch die Verdampfung der Zusatzmittel gekühlt werden kann.

Die Erfindung betrifft ferner ein Verfahren zum insbesondere isothermen Verdichten technischer Gase, bei dem ein technisches Gas, das eine Hauptkomponente und mindestens eine Verunreinigung aufweist, einem Verdichter zugeführt wird, der wie vorstehend beschrieben aus- und weitergebildet sein kann. Zusätzlich wird das technische Gas von der Verdrängerflüssigkeit komprimiert, wobei gleichzeitig zumindest ein Teil der Verunreinigung von der Verdrängerflüssigkeit absorbiert wird. Nachfolgend wird aus zumindest einem Teil der Verdrängerflüssigkeit die absorbierte Verunreinigung in die Gasphase zumindest teilweise desorbiert und abgeführt. Durch den für den Verdichter zusätzlichen zu dem Verdichtungszylinder vorgesehenen und von dem Verdichtungszylinder getrennten Entspannungsraum können die von der Verdrängerflüssigkeit absorbierten Verunreinigungen in einer kontrollierten Atmosphäre wieder abgetrennt werden, so dass eine Alterung der Verdrängerflüssigkeit durch eine fortschreitende Kontamination mit absorbierten Verunreinigungen vermieden oder zumindest deutlich reduziert werden kann. Der Verfahren ist dadurch unempfindlicher gegen Verunreinigungen der zu verdichtenden technischen Gase. Das Verfahren kann insbesondere wie vorstehend anhand des erfindungsgemäßen Verdichters erläutert aus- und weitergebildet sein.

Insbesondere wird bei der Desorption der absorbierten Verunreinigung die Verunreinigung durch eine Druckverringerung und/oder Temperaturerhöhung verdampft. Eine Gaswäsche oder Extraktion ist nicht erforderlich.

Vorzugsweise wird bei einem Entleeren des Verdichtungszylinder sowohl ein Zusatzzylinder zur stufenweisen Verdichtung des technischen Gases als auch der Entspannungsraum gleichzeitig mit der entleerten Verdrängerflüssigkeit befüllt. Dies ermöglicht es das Entleeren des Verdichtungszylinder sowie das Befüllen des Zusatzzylinders und des Entspannungsraums mit einer gemeinsamen Kompressorpumpe durchzuführen. Zusätzliche Pumpen und eine die Arbeitsweise der verschiedenen Pumpen aufeinander abstimmende Steuerlogik sind nicht erforderlich.

Besonders bevorzugt wird der Entspannungsraum zur Desorption der Verunreinigung in die Gasphase nur teilweise befüllt. Dadurch verbleibt in dem Entspannungsraum eine Gasphase, in welche die in der Verdrängerflüssigkeit gelösten Verunreinigungen übertreten können. Gleichzeitig kann ein hohes Druckniveau vermieden werden und mit Hilfe der Purge-Pumpe ein möglichst niedriges Druckniveau innerhalb des Entspannungsraums aufrecht erhalten werden. Insbesondere kann vermieden werden, dass die Purge-Pumpe unbeabsichtigt Verdrängerflüssigkeit aus dem Entspannungsraum austrägt.

Insbesondere wird durch nachströmende Verdrängerflüssigkeit die desorbierte Verunreinigung aus dem Entspannungsraum verdrängt. Der Austrag der desorbierten Verunreinigungen aus dem Entspannungsraum kann dadurch verbessert werden. Insbesondere kann das Restvolumen für die Gasphase verringert werden, wenn die Purge-Pumpe bereits einen definierten besonders niedrigen Druck erreicht hat, so dass der Volumenstrom der Purge-Pumpe und der Wirkungsgrad der Purge-Pumpe verbessert werden kann ohne eine signifikante Absorbtion der zuvor desorbierten Verunreinigungen in kauf nehmen zu müssen. Der Volumenstrom der nachströmenden Verdrängerflüssigkeit kann insbesondere an den Volumenstrom und/oder den Druck im Entspannungsraum angepasst werden.

Nachfolgend wird die Erfindung unter Bezugnahme auf die anliegende Zeichnung anhand eines bevorzugten Ausführungsbeispiels exemplarisch erläutert. Es zeigt:

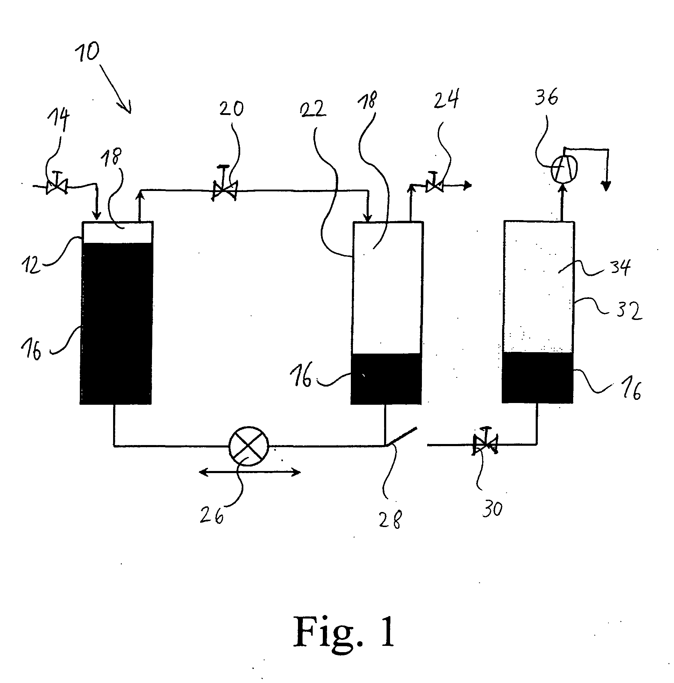

Fig. 1: ein schematisches Schaltbild eines erfindungsgemäßen Verdichters.

Der in Fig. 1 dargestellte Verdichter 10 weist einen Verdichtungszylinder 12 auf, der über ein Einlassventil 14 mit einem Verunreinigungen aufweisenden technischen Gas gefüllt werden kann. Anschließend kann das Einlassventil 14 geschlossen werden und eine als ionische Flüssigkeit 16 ausgestaltete Verdrängerflüssigkeit eingefüllt werden, die das technische Gas auf ein Restvolumen 18 komprimiert. Hierbei kann die ionische Flüssigkeit 16 entstehende Verdichtungswärme aufnehmen und Verunreinigungen absorbieren. Bei einem hinreichend hohen Druck kann ein mit dem Verdichtungszylinder 12 verbundenes Auslassventil 20 geöffnet werden. Im vorliegenden Ausführungsbeispiel kann das verdichtete Gas in einer weiteren Verdichtungsstufe einem Zusatzzylinder 22 zugeführt werden, wo das Gas erneut mit Hilfe der ionischen Flüssigkeit 16 auf ein Restvolumen 18 komprimiert werden kann. Nach der erneuten Komprimierung kann das Gas über ein weiteres Auslassventil 24 einem Speicher, einem Verbraucher oder einem weiteren Zusatzzylinder 22 zugeführt werden.

Mit Hilfe einer Kompressorpumpe 26 kann der Verdichtungszylinder 22 und/oder der Zusatzzylinder 22 gefüllt und/oder geleert werden. Im dargestellten Ausführungsbeispiel ist zwischen der Kompressorpumpe 26 und dem Zusatzzylinder 22 ein Verzweigungsventil 28 vorgesehen, das über ein Drosselventil 30 einen Entspannungsraum 32 anbindet. Die Kompressorpumpe 26 kann die mit absorbierten Verunreinigungen beladene ionische Flüssigkeit 16 in den Entspannungsraum 32 pumpen, wo die ionische Flüssigkeit 16 aufgrund des Drosselventils 30 einem deutlich geringeren Druck ausgesetzt ist. Dadurch können die absorbierten Verunreinigungen innerhalb des Entspannungsraums 32 in die Gasphase 34 übergehen, so dass die Verunreinigungen mit Hilfe einer als Vakuumpumpe 36 ausgestalteten Purge-Pumpe abgetrennt werden können. Nachfolgend kann die im Entspannungsraum 32 gereinigte ionische Flüssigkeit 16 mit Hilfe der Kompressorpumpe 26 aus dem Entspannungsraum 32 herausgepumpt werden und wieder für die Verdichtung im Verdichtungszylinder 12 und/oder im Zusatzzylinder 22 verwendet werden, wobei durch die Reinigung der ionischen Flüssigkeit 16 besser Verunreinigungen absorbiert werden können ohne die ionische Flüssigkeit 16 aufgrund von Alterungseffekten und sich verändernden chemischen und/oder physikalischen Eigenschaften austauschen zu müssen.

## Patentansprüche

1. Verdichter zum insbesondere isothermen Verdichten technischer Gase, mit
einem Verdichtungszylinder (12), in den ein Verunreinigungen aufweisendes technisches Gas einleitbar ist, und
einer mit einer Kompressorpumpe (26) in den Verdichtungszylinder (12) einleitbaren Verdrängerflüssigkeit (16), wobei die Verdrängerflüssigkeit (16) für mindestens eine Verunreinigung des technischen Gases eine höhere Löslichkeit als für eine Hauptkomponente des technischen Gases aufweist, **dadurch gekennzeichnet, dass**
ein Entspannungsraum (32) zur Desorption der Verunreinigung aus zumindest einen Teil der Verdrängerflüssigkeit (16) vorgesehen ist, wobei eine Purge-Pumpe (36) zur Abfuhr von in die Gasphase (34) übergegangener Verunreinigungen mit dem Entspannungsraum (32) verbunden ist.

2. Verdichter nach Anspruch 1, **dadurch gekennzeichnet, dass** der Entspannungsraum (32) zur Desorption der Verunreinigungen nur teilweise von der Verdrängerflüssigkeit (16) befüllbar ist.

3. Verdichter nach Anspruch 1 oder 2, **dadurch gekennzeichnet, dass** der Entspannungsraum (32) bei eingeleiteter Verdrängerflüssigkeit (16) einen Entspannungsdruck p_{E} und der Verdichterzylinder (12) im im Wesentlichen entleerten Zustand einen Ansaugdruck p_{A} aufweist, wobei der Entspannungsdruck p_{E} geringer als der Ansaugdruck p_{A} ist, wobei insbesondere 0,000001 ≤ p_{E}/p_{A} ≤ 0,9, vorzugsweise 0,0005 ≤ p_{E}/p_{A} ≤ 0,7, weiter bevorzugt 0,01 ≤ p_{E}/p_{A} ≤ 0,5 und besonders bevorzugt 0,2 ≤ p_{E}/p_{A} ≤ 0,4 gilt.

4. Verdichter nach einem der Ansprüche 1 bis 3, **dadurch gekennzeichnet, dass** der Entspannungsraum (32) bei eingeleiteter Verdrängerflüssigkeit (16) einen Entspannungsdruck p_{E} aufweist, wobei für den Entspannungsdruck p_{E} 10 hPa ≤ p_{E} ≤ 1000 hPa, insbesondere 50 hPa ≤ p_{E} ≤ 800 hPa, vorzugsweise 100 hPa ≤ p_{E} ≤ 600 hPa und besonders bevorzugt 200 hPa ≤ p_{E} ≤ 400 hPa gilt.

5. Verdichter nach einem der Ansprüche 1 bis 4, **dadurch gekennzeichnet, dass** der Entspannungsraum (32) eine Temperatur T_{E} und der Verdichtungszylinder (12) eine Verdichtertemperatur T_{V} aufweist, wobei 1 K ≤ (T_{E} -T_{V}) ≤ 100 K, insbesondere 5 K ≤ (T_{E} -T_{V}) ≤ 50 K und vorzugsweise 10 K ≤ (T_{E} -T_{V}) ≤ 30 K gilt.

6. Verdichter nach einem der Ansprüche 1 bis 5, **dadurch gekennzeichnet, dass** die Purge-Pumpe als Vakuumpumpe (36) ausgestaltet ist.

7. Verdichter nach einem der Ansprüche 1 bis 6, **dadurch gekennzeichnet, dass** mindestens ein Zusatzzylinder (22) zur stufenweisen Verdichtung des technischen Gases vorgesehen ist, wobei die Kompressorpumpe (26) derart mit dem Verdichtungszylinder (12), dem Zusatzzylinder (22) und dem Entspannungsraum (32) verbunden ist, dass bei einem Entleeren des Verdichtungszylinder (12) mit Hilfe der Kompressorpumpe (26) sowohl der Zusatzzylinder (22) als auch der Entspannungsraum (32) befüllbar ist.

8. Verdichter nach einem der Ansprüche 1 bis 7, **dadurch gekennzeichnet, dass** die Verdrängerflüssigkeit (16) bei 23°C und 1000 hPa ein Dampfdruck pᵥ von pᵥ ≤ 1 hPa, insbesondere pᵥ ≤ 0,1 hPa, vorzugsweise pᵥ ≤ 0,01 hPa und besonders bevorzugt pᵥ ≤ 0,001 hPa aufweist.

9. Verdichter nach einem der Ansprüche 1 bis 8, **dadurch gekennzeichnet, dass** die Verdrängerflüssigkeit (16) mindestens eine ionische Flüssigkeit aufweist.

10. Verdichter nach Anspruch 9, **dadurch gekennzeichnet, dass** die Verdrängerflüssigkeit (16) 1-Butyl-2,3-dimethylimidazoliumbis(trifluoromethylsulfonyl)imid und/oder 1-Butyl-3-ethyl-2-dimethylimidazoliumbis(trifluoromethylsulfonyl)imid enthält.

11. Verfahren zum insbesondere isothermen Verdichten technischer Gase, bei dem
ein technisches Gas, das eine Hauptkomponente und mindestens eine Verunreinigung aufweist, einem Verdichter (10) nach einem der Ansprüche 1 bis 10, zugeführt wird,
das technische Gas von der Verdrängerflüssigkeit (16) komprimiert wird, wobei gleichzeitig zumindest ein Teil der Verunreinigung von der Verdrängerflüssigkeit (16) absorbiert wird und
nachfolgend aus zumindest einem Teil der Verdrängerflüssigkeit (16) die absorbierte Verunreinigung in die Gasphase (34) zumindest teilweise desorbiert und abgeführt wird.

12. Verfahren nach Anspruch 11, bei dem bei der Desorption der absorbierten Verunreinigung die Verunreinigung durch eine Druckverringerung und/oder Temperaturerhöhung verdampft wird.

13. Verfahren nach Anspruch 11 oder 12, bei dem bei einem Entleeren des Verdichtungszylinder (12) sowohl ein Zusatzzylinder (22) zur stufenweisen Verdichtung des technischen Gases als auch der Entspannungsraum (32) gleichzeitig mit der entleerten Verdrängerflüssigkeit (16) befüllt wird.

14. Verfahren nach einem der Ansprüche 11 bis 13, bei dem der Entspannungsraum (32) zur Desorption der Verunreinigung in die Gasphase (34) nur teilweise befüllt wird.

15. Verfahren nach einem der Ansprüche 11 bis 14, bei dem durch nachströmende Verdrängerflüssigkeit (16) die desorbierte Verunreinigung aus dem Entspannungsraum (32) verdrängt wird.

## Claims

1. Compressor for the, in particular, isothermal compression of industrial gases, with
a compression cylinder (12) into which an industrial gas having impurities can be introduced, and
a displacement fluid (16) capable of being introduced into the compression cylinder (12) by means of a compressor pump (26), the displacement fluid (16) having higher solubility for at least one impurity of the industrial gas than for a main component of the industrial gas, **characterized in that**
an expansion space (32) for the desorption of the impurity from at least part of the displacement fluid (16) is provided, a purge pump (36) for the discharge of impurities which have assumed the gas phase (34) being connected to the expansion space (32).

2. Compressor according to Claim 1, **characterized in that** the expansion space (32) can be filled only partially with the displacement fluid (16) for the desorption of the impurities.

3. Compressor according to Claim 1 or 2, **characterized in that**, when the displacement fluid (16) is introduced, the expansion space (32) has an expansion pressure p_{E} and the compressor cylinder (12), in the essentially emptied state, has an intake pressure p_{A}, the expansion pressure p_{E} being lower than the intake pressure p_{A}, in particular 0.000001 ≤ p_{E}/p_{A} ≤ 0.9, preferably 0.0005 ≤ p_{E}/p_{A} ≤ 0.7, further preferably 0.01 ≤ p_{E}/p_{A} ≤ 0.5 and especially preferably 0.2 ≤ p_{E}/p_{A} ≤ 0.4.

4. Compressor according to one of Claims 1 to 3, **characterized in that**, when the displacement fluid (16) is introduced, the expansion space (32) has an expansion pressure p_{E}, the expansion pressure p_{E} being 10 hPa ≤ p_{E} ≤ 1000 hPa, in particular 50 hPa ≤ p_{E} ≤ 800 hPa, preferably 100 hPa ≤ p_{E} ≤ 600 hPa and especially preferably 200 hPa ≤ p_{E} ≤ 400 hPa.

5. Compressor according to one of Claims 1 to 4, **characterized in that** the expansion space (32) has a temperature T_{E} and the compression cylinder (12) a compressor temperature T_{V}, where 1 K ≤ (T_{E} -T_{V}) ≤ 100 K, in particular 5 K ≤ (T_{E} -T_{V}) ≤ 50 K and preferably 10 K ≤ (T_{E} -T_{V}) ≤ 30 K applies.

6. Compressor according to one of Claims 1 to 5, **characterized in that** the purge pump is configured as a vacuum pump (36).

7. Compressor according to one of Claims 1 to 6, **characterized in that** at least one additional cylinder (22) for the stepped compression of the industrial gas is provided, the compressor pump (26) being connected to the compression cylinder (12), to the additional cylinder (22) and to the expansion space (32) in such a way that, when the compression cylinder (12) is being emptied, both the additional cylinder (22) and the expansion space (32) can be filled with the aid of the compressor pump (26).

8. Compressor according to one of Claims 1 to 7, **characterized in that** the displacement fluid (16) has, at 23°C and 1000 hPa, a vapor pressure p_{V} of p_{V} ≤ 1 hPa, in particular p_{V} ≤ 0.1 hPa, preferably p_{V} ≤ 0.01 hPa and especially preferably p_{V} ≤ 0.001 hPa.

9. Compressor according to one of Claims 1 to 8, **characterized in that** the displacement fluid (16) has at least one ionic fluid.

10. Compressor according to Claim 9, **characterized in that** the displacement fluid (16) contains 1-butyl-2,3-dimethylimidazoliumbis(trifluoromethylsulfonyl)imide and/or 1-butyl-3-ethyl-2-dimethylimidazoliumbis(trifluoromethylsulfonyl)imide.

11. Method for the, in particular, isothermal compression of industrial gases, in which
an industrial gas which has a main component and at least one impurity is delivered to a compressor (10) according to one of Claims 1 to 10,
the industrial gas is compressed by the displacement fluid (16), at the same time at least part of the impurity being absorbed by the displacement fluid (16), and
subsequently the absorbed impurity is at least partially desorbed from at least part of the displacement fluid (16) into the gas phase (34) and is discharged.

12. Method according to Claim 11, in which, during the desorption of the absorbed impurity, the impurity is evaporated as a result of a pressure drop and/or temperature rise.

13. Method according to Claim 11 or 12, in which, when the compression cylinder (12) is being emptied, both an additional cylinder (22) for the stepped compression of the industrial gas and the expansion space (32) are simultaneously filled with the emptied displacement fluid (16).

14. Method according to one of Claims 11 to 13, in which the expansion space (32) is filled only partially for the desorption of the impurity into the gas phase (34).

15. Method according to one of Claims 11 to 14, in which displacement fluid (16) flowing in displaces the desorbed impurity out of the expansion space (32).

## Revendications

1. Compresseur destiné en particulier à la compression isotherme de gaz techniques et présentant
un cylindre de compression (12) dans lequel un gaz technique présentant des impuretés peut être introduit et
un liquide de refoulement (16) qui peut être introduit dans le cylindre de compression (12) à l'aide d'une pompe (26) de compresseur,
le liquide de refoulement (16) présentant une solubilité plus élevée pour au moins une impureté du gaz technique que pour un composant principal du gaz technique,
**caractérisé en ce que**
le compresseur présente un espace de détente (32) qui permet la désorption de l'impureté hors d'au moins une partie du liquide de refoulement (16) et
**en ce qu'**une pompe de purge (36) permettant l'évacuation des impuretés transférées en phase gazeuse (34) est reliée à l'espace de détente (32).

2. Compresseur selon la revendication 1, **caractérisé en ce que** l'espace de détente (32) servant à la désorption des impuretés ne peut être rempli qu'en partie par le liquide de refoulement (16).

3. Compresseur selon les revendications 1 ou 2, **caractérisé en ce que** l'espace de détente (32) présente une pression de détente p_{E} lorsque le liquide de refoulement (16) est introduit, **en ce que** le cylindre (12) du compresseur présente une pression d'aspiration p_{A} lorsqu'il est à l'état essentiellement vide et **en ce que** la pression de détente p_{E} est inférieure à la pression d'aspiration p_{A}, avec en particulier 0,000001 ≤ p_{E}/p_{A} ≤ 0,9, de préférence 0,0005 ≤ p_{E}/p_{A} ≤ 0,7, de manière encore plus préférable 0,01 ≤ p_{E}/p_{A} ≤ 0,5 et de façon particulièrement préférable 0,2 ≤ p_{E}/p_{A} ≤ 0,4.

4. Compresseur selon l'une des revendications 1 à 3, **caractérisé en ce que** l'espace de détente (32) présente une pression de détente p_{E} lorsque le liquide de refoulement (16) est introduit, la pression de détente p_{E} vérifiant la relation 10 hPa ≤ p_{E} ≤ 1000 hPa, en particulier la relation 50 hPa ≤ p_{E} ≤ 800 hPa, de préférence la relation 100 hPa ≤ p_{E} ≤ 600 hPa et de façon particulièrement préférable la relation 200 hPa ≤ p_{E} ≤ 400 hPa.

5. Compresseur selon l'une des revendications 1 à 4, **caractérisé en ce que** l'espace de détente (32) présente une température T_{E} et le cylindre de compression (12) une température de compresseur T_{V}, avec 1 K ≤ (T_{E} - T_{V}) ≤ 100 K, en particulier 5 K ≤ (T_{E} - T_{V}) ≤ 50 K et de préférence 10 K ≤ (T_{E} - T_{V}) ≤ 30 K.

6. Compresseur selon l'une des revendications 1 à 5, **caractérisé en ce que** la pompe de purge est configurée comme pompe à vide (36).

7. Compresseur selon l'une des revendications 1 à 6, **caractérisé en ce qu'**il présente au moins un cylindre supplémentaire (22) permettant de comprimer par gradins le gaz technique et **en ce que** la pompe de compresseur (26) est reliée au cylindre de compression (12), au cylindre supplémentaire (22) et à l'espace de détente (32) de telle sorte que tant le cylindre supplémentaire (22) que l'espace de détente (32) peuvent être remplis lorsque le cylindre de compression (12) est vidé à l'aide de la pompe de compresseur (26).

8. Compresseur selon l'une des revendications 1 à 7, **caractérisé en ce que** le liquide de refoulement (16) présente à 23°C et 1000 hPa une tension de vapeur p_{V} de p_{V} ≤ 1 hPa, en particulier p_{V} ≤ 0,1 hPa, de préférence p_{V} ≤ 0,01 hPa et de façon particulièrement préférable p_{V} ≤ 0, 001 hPa.

9. Compresseur selon l'une des revendications 1 à 8, **caractérisé en ce que** le liquide de refoulement (16) présente au moins un liquide ionique.

10. Compresseur selon la revendication 9, **caractérisé en ce que** le liquide de refoulement (16) contient du 1-butyl-2,3-diméthylimidazolium-bis(trifluorométhylsulfonyl)imide et/ou du 1-butyl-3-éthyl-2-diméthylimidazolium-bis(trifluorométhylsulfonyl)imide.

11. Procédé de compression en particulier isotherme de gaz techniques, dans lequel
un gaz technique qui présente un composant principal et au moins une impureté est apporté à un compresseur (10) selon l'une des revendications 1 à 10,
le gaz technique est comprimé par le liquide de refoulement (16) et en même temps au moins une partie de l'impureté est absorbée par le liquide de refoulement (16) et
au moins une partie de l'impureté absorbée est ensuite désorbée en phase gazeuse (34) d'au moins une partie du liquide de refoulement (16) et est évacuée.

12. Procédé selon la revendication 11, dans lequel la désorption de l'impureté absorbée vaporise l'impureté par diminution de pression et/ou augmentation de température.

13. Procédé selon les revendications 11 ou 12, dans lequel lors de la vidange du cylindre de compression (12), un cylindre supplémentaire (22) est rempli pour comprimer par gradins le gaz technique et l'espace de détente (32) est en même temps rempli du liquide de refoulement (16) extrait.

14. Procédé selon l'une des revendications 11 à 13, dans lequel l'espace de détente (32) n'est rempli que partiellement en vue de la désorption de l'impureté en phase gazeuse (34).

15. Procédé selon l'une des revendications 11 à 14, dans lequel l'impureté désorbée est refoulée hors de l'espace de détente (32) en y faisant s'écouler le liquide de refoulement (16).
